# EUROPÄISCHE PATENTANMELDUNG

(11) **EP 1 596 596 A1**
(43) Veröffentlichungstag der Anmeldung: **16.11.2005**
(21) Anmeldenummer: 05009173.5
(22) Anmeldetag: 27.04.2005
(51) Int. Cl.: H04N 7/10, H04N 7/16

(54) **Gerät zum Aufteilen eines Kabel-, Sat- oder terrestrischen Eingangssignals in mehrere Teilnehmer-Ausgangssignale**

(30) Priorität: 10.05.2004 DE 102004023511
(71) Anmelder: ASC-TEC AG Antennen-Satelliten-Communication-Technik, 78351 Bodman (DE)
(72) Erfinder: Grömminger, Fredi, 78333 Stockach-Hoppetenzell (DE); Boll, Christian, 78351 Bodman-Ludwigshafen (DE); Manz, Werner, 88662 Überlingen-Bonndorf (DE)
(74) Vertreter: Weiss, Peter

(57) **Zusammenfassung**

Bei einem Gerät zum Aufteilen zumindest eines Eingangssignals (E) als Kabel-, Sat- oder terrestrisches Eingangssignal (E) in mehrere Ausgangssignale (O₁, O₂ bis Oₙ) für mehrere Audio- oder TV-Teilnehmer (T₁, T₂ bis Tₙ), soll in einem Verstärker (1) einen Verteiler (2) zur Aufteilung des Eingangssignals (E) in mehrere Signale (Sᵤ, S₉ bis Sₙ) für mehrere Teilnehmer (T₁, T₂ bis Tₙ) in einer Einheit vorgesehen sein.

## Beschreibung

Die vorliegende Erfindung betrifft ein Gerät zum Aufteilen zumindest eines Eingangssignals als Kabel-, Sat- oder terrestrisches Eingangssignal in mehrere Ausgangssignale für mehrere Audio- oder TV-Teilnehmer.

Bei herkömmlichen Geräten wird ein Eingangssignal bspw. als Kabelsignal für TV in einem Haus mit einem oder mehreren Teilnehmern bereitgestellt. Dieses Signal wird in einen separaten Verstärker zur weiteren Verarbeitung verstärkt.

Im Anschluss an den Verstärker schliesst ein eigenständiges Gerät als Verteiler an, in welchem dann entsprechende Eingangssignal auf mehrere Teilnehmer aufgeteilt werden.

Soll ein Teilnehmer lediglich ein begrenztes Signal erhalten, bspw. als gefiltertes Signal, um bestimmt Mehrwertdienste nicht zu erhalten, für welche er auch nicht bezahlten möchte, so wird aufwendig in den Verteiler ein Sperrfilter eingelötet.

Hierzu ist erforderlich, dass entsprechendes Personal vor Ort, einen entsprechenden Sperrfilter in den Verteiler installiert, was zeit- und kostenaufwendig ist.

Ändert sich der Teilnehmer oder dessen Zugangswünsche, so muss wiederum vor Ort zeit- und kostenaufwendig das Teilnehmersignal durch bspw. durch Herausnehmen des Sperrfilters als unbegrenztes Signal freigeschaltet werden.

Der vorliegenden Erfindung liegt daher die Aufgabe zugrunde ein Gerät, insbesondere für Kabelnetzbetreiber zu schaffen, welches kostengünstiger herzustellen ist, kleiner zu montieren ist, und sehr kostengünstig hinsichtlich der Einstellung und Auswahl der gewünschten Teilnehmer und gewünschten Ausgangssignale für beliebige Teilnehmer einstellbar ist.

Zudem soll eine Ferneinstellung, Fernwartung sowie eine Fernansteuerung des Gerätes möglich sein.

Zur Lösung dieser Aufgabe führen die Merkmale der Kennzeichen des Patentanspruches 1 sowie die der nebengeordneten Patentansprüche.

Bei der vorliegenden Erfindung hat sich als besonders vorteilhaft erwiesen, zumindest ein Eingangssignal, als Kabel-, Netz- oder terrestrisches Eingangssignal für Audio- und/oder TV und Internet sowie Modembetrieb über einen Verstärker zu verstärken, wobei im Verstärker selbst im selben Gerät gleichzeitig der Verteiler vorgesehen ist. Im Verteiler wird das verstärkte Eingangssignal in unterschiedliche Signale, hinsichtlich ihrer Verwendung aufgeteilt. Ferner kann das Signal als ungefiltertes Signal, als gefiltertes Signal aufgespaltet werden, wobei hier auch in unterschiedliche ungefilterte oder in unterschiedlich gefilterte Signale das verstärkte Signal aufgespaltet werden kann. Die Anzahl der Aufspaltung in beliebige Signale ist beliebig.

Über entsprechende Schalter lassen sich dann beliebige Ausgangssignale von den aufgeteilten Signalen abgreifen bzw. schalten.

Die Schaltung erfolgt im Gerät vorzugsweise über Jumper, wobei über die entsprechende Einstellung der Jumper den Teilnehmern, teilnehmerindividuell gewünschte Signale ungefiltert oder gefiltert zur Verfügung gestellt werden.

Dabei kann der Monteur vor Ort lediglich durch die Jumperwahl im Gerät einstellen, welcher Teilnehmer welches Signal erhalten soll, oder er kann sogar ein entsprechendes Signal für einen bestimmten Teilnehmer über die Jumper abschalten.

Über eine nachträglich installierbare und austauschbare elektrische Steuerung, die über Schalter verbindbar oder verbunden ist, lässt sich auch über eine entsprechende intelligente Steuerung von extern, über bspw. einen Kabelnetzbetreiber oder drahtlos über Handy, Satellit oder Funk teilnehmerindividuell eine entsprechende Einstellung des Schalters auswählen, so dass dann der Teilnehmer das gewünschte bzw, berechtigte Signal erhält. Auf diese Weise lässt sich von extern drahtlos oder aufmoduliert über das Eingangssignal jeder Teilnehmer bzw, jeder Schalter des einzelnen Teilnehmers ansteuern, um teilnehmerindividuell ein Ausgangssignal, als gefiltertes oder ungefiltertes Signal beliebiger Art einzustellen.

Dabei können im Verstärker bzw. im Verteiler das Eingangssignal in beliebig viele unterschiedliche Signale aufgespaltet werden, die dann beliebig vielen Teilnehmern manuell oder automatisch einstellbar hinsichtlich der Art des Signals gefiltert oder ungefiltert zur Verfügung gestellt werden können. Dies kann manuell über die Jumper oder automatisch über die elektrische Steuerung geschehen. Auf diese Weise lassen sich bei der vorliegenden Erfindung insbesondere bei Kabelnetzbetreiber sehr viele Installations-, Wartungs- und Betriebskosten einsparen. Zudem kann der Kabelnetzbetreiber extern und Software gesteuert, die Einstellung des beliebigen Teilnehmers, die Abschaltung sowie Freischaltung eines gewünschten bestimmten Signals über ein gemeinsames Gerät zeitsparend und schnell durchführen.

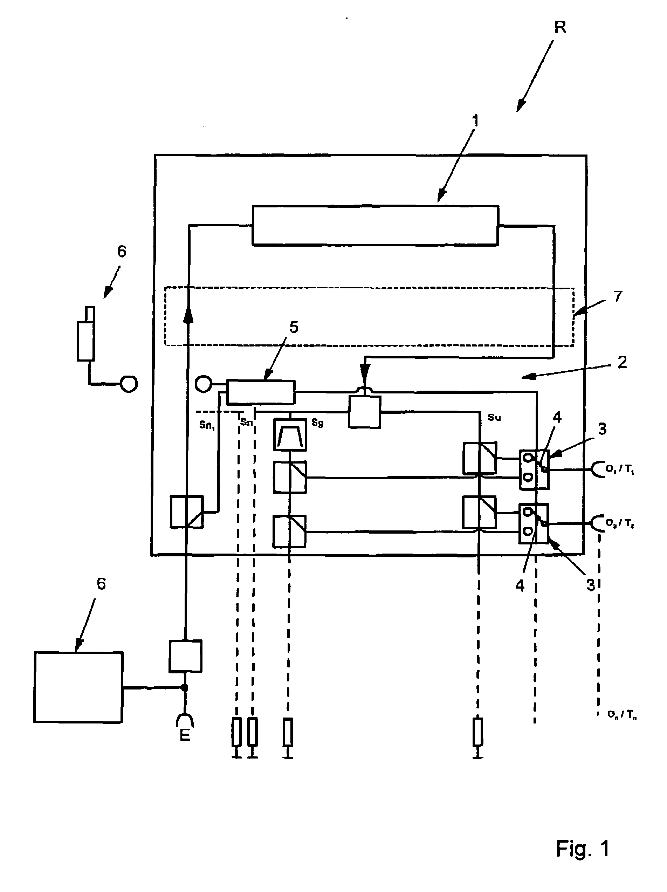

weitere Vorteile, Merkmale und Einzelheiten der Erfindung ergeben sich aus der nachfolgenden Beschreibung eines bevorzugten Ausführungsbeispieles, dies zeigt in ihrer einzigen Figur gemäss Figur 1 eine blockschaltbildliche schematische Darstellung eines Gerätes zum Aufteilen zumindest eines Eingangssignals, als Kabel-, Sat- oder terrestrisches Eingangssignal.

Gemäss Figur 1 weist ein erfindungsgemässes Gerät R zum Aufteilen zumindest eines Eingangssignals E als Kabel-, Sat- oder terrestrisches Eingangssignal E einen Verstärker 1 auf, in welchem das Eingangssignal E verstärkt wird. Im Verstärker 1 integriert oder diesem nachgeschaltet sitzt im gleichen Gerät R ein Verteiler 2, welcher das Eingangssignal E in beliebig viele Signale des Sₙ, Sᵤ, S_{g} aufspaltet.

Bevorzugt wird im Verteiler das Signal E als ungefiltertes Signal Sᵤ und gefiltertes Signal S_{g} aufgespaltet.

Diese beiden Signale werden für den jeweiligen Teilnehmer bzw. Ausgangssignal O₁, O₂ bis Oₙ in einzelnen Schalter 3 zusammengefasst. Jedem Teilnehmer T₁, T₂, Tₙ ist ein Schalter 3 zugeordnet. Im Schalter 3 kann dann bspw. über Jumper 4, manuell eingestellt werden, ob der Ausgang O₁ ein ungefiltertes Signal Sᵤ oder ein gefiltertes Signal S_{g} erhält, oder der Ausgang O₁, O₂ bis Oₙ abschaltbar ist.

Dabei können eine beliebige Vielzahl von Ausgängen O₁, O₂ bis Oₙ an eine beliebige Vielzahl von aufgeteilten Signalen Sᵤ ungefiltert, S_{g} gefiltert, Sn, bis Sn1 angeschlossen werden. Hierauf sei die Erfindung nicht beschränkt.

Auf diese Weise lässt sich mittels des Jumpers 4 jeder beliebige Teilnehmer T₁, T₂ bis Tₙ individuell abschalten, oder ein gewünschtes ungefiltertes Signal Sᵤ oder gefiltertes Signal S_{g} zuweisen, um unterschiedliche Mehrwertdienste zu erhalten oder abzuschalten. Dies kann dann vom Kabelnetzbetreiber 6 für eine beliebige Anzahl von Teilnehmer T₁, T₂, Tₙ individuell eingestellt bzw. eingeschaltet werden.

Auch bei sich ändernden Teilnehmern bzw. Zugängen und Zugangsberechtigungen lässt sich dann über den Jumper 4 das entsprechende gewünschte Signal Sᵤ, ungefiltert, Sg gefiltert etc. individuell schalten oder aber vollständig abschalten.

Zusätzlich, die Jumper 4 ersetzend oder ergänzend, kann zwischen dem Eingangssignal E und den jeweiligen Schaltern 3 eine elektrische Steuerung 5 dem Gerät R nachgerüstet werden, um die einzelnen Schalter 3 bzw. die einzelnen Ausgangssignale O₁, O₂ bis Oₙ bzw. Teilnehmer T₁, T₂ bis Tₙ individuell für ein entsprechendes gewünschtes Signal Sᵤ, S_{g} oder Sₙ bis Sₙ₁ freizuschalten oder abzuschalten.

Dabei kann die elektrische Steuerung 5 von ausserhalb, bspw. von einem externen Kabelnetzbetreiber 6 aufmoduliert, über das Eingangssignal E oder drahtlos bspw. via Handy, Satellit od, dgl. teilnehmerindividuell betreffend die Teilnehmer T₁, T₂ bis Tₙ abschalten, oder für gewünschte Signale Sᵤ, S_{g} oder Sₙ freischalten. Dabei erfolgt die Freischaltung von extern, teilnehmerindividuell, ohne dass Personal vor Ort die entsprechende Einstellung über Jumper 4 übernehmen muss.

Diese elektrische Steuerung 5 kann in das Gerät R als beliebiges und wählbares Modul, als drahtloses, steuerbares Modul oder als direkt über das Eingangssignal E ansteuerbares Modul kabelnetzbetreiberspezifisch nachgerüstet werden. Hierauf sei die Erfindung nicht beschränkt. Dieses Modul kann dann entsprechende Jumper 4 ersetzen. Über die elektrische Steuerung 5 werden dann die jeweiligen Teilnehmer T₁, T₂ bis Tₙ freigeschaltet oder über die Schalter 3 direkt freigeschaltet.

Ferner kann parallel zum Verstärker 1 ein Rückwegmodul 7, wie es gestrichelt dargestellt ist, eingesetzt oder nachgerüstet werden, um entsprechende HSI-Modem zu betreiben. Dies soll ebenfalls im Rahmen der vorliegenden Erfindung liegen.

## Patentansprüche

1. Gerät zum Aufteilen zumindest eines Eingangssignals (E) als Kabel-, Sat- oder terrestrisches Eingangssignal (E) in mehrere Ausgangssignale (O₁, O₂ bis Oₙ) für mehrere Audio- oder TV-Teilnehmer (T₁, T₂ bis Tₙ),
**dadurch gekennzeichnet,**
**dass** in einem Verstärker (1) einen Verteiler (2) zur Aufteilung des Eingangssignals (E) in mehrere Signale (Sᵤ, S_{g} bis Sₙ) für mehrere Teilnehmer (T₁, T₂ bis Tₙ) in einer Einheit vorgesehen ist.

2. Gerät zum Aufteilen zumindest eines Eingangssignals als Kabel-, Sat- oder terrestrisches Eingangssignal in mehrere Ausgangssignale (O₁, O₂, Oₙ) für mehrere Audio- oder TV-Teilnehmer (T₁, T₂ bis Tₙ), **dadurch gekennzeichnet, dass** über Jumper (4) im Gerät für jeden Audio- oder TV-Teilnehmer (T₁, T₂ bis Tₙ) individuell ein Signal abschaltbar, als gewünschtes und auswählbares gefiltertes oder als ungefiltertes Signal (S_{g} oder Sᵤ) bereitstellbar ist.

3. Gerät zum Aufteilen zumindest eines Eingangssignals als Kabel-, Sat- oder terrestrisches Eingangssignal in mehrere Ausgangssignale (O₁, O₂ bis Oₙ) für mehrere Audio- oder TV-Teilnehmer (T₁, T₂ bis Tₙ), **dadurch gekennzeichnet, dass** im Gerät eine elektrische Steuerung (5) vorgesehen ist oder nachrüstbar ist, mit welcher für den Teilnehmer (T₁, T₂, Tₙ) individuell dessen Signal abschaltbar, als gefiltertes Signal (S_{g}) oder ungefiltertes Signal (Sᵤ) von extern bereitstellbar ist.

4. Gerät nach wenigstens einem der Ansprüche 1 bis 3, **dadurch gekennzeichnet, dass** die elektrische Steuerung (5) drahtlos oder über das Eingangssignal (E) moduliert, individuell für jeden Teilnehmer (T₁, T₂ bis Tₙ) dessen Signal abschaltet, als gefiltertes Signal (S_{g}) oder ungefiltertes Signal (Sᵤ) für den Teilnehmer (T₁, T₂, Tₙ) individuell auswählbar bereitstellt.

5. Gerät nach wenigstens einem der Ansprüche 1 bis 4, **dadurch gekennzeichnet, dass** über ein Jumper (4) jedes beliebige Signal (Sᵤ, S_{g}, Sₙ) des beliebigen Teilnehmers (T₁, T₂, Tₙ) abschaltbar ist oder als gefiltertes Signal (S_{g}) zum Sperren von Mehrwertdiensten beschränkt oder unbeschränkt als ungefiltertes Signal (Sᵤ) entsprechend der Jumperstellung der Jumper (4) im Schalter (3) bereitstellbar ist.

6. Gerät nach wenigstens einem der Ansprüche 3 bis 6, **dadurch gekennzeichnet, dass** die elektrische Steuerung (5) als plug-in Komponente nachrüstbar ist.

7. Geräte nach Anspruch 6, **dadurch gekennzeichnet, dass** die elektrische Steuerung (5) eine Funktion der Jumper (4) ersetzt oder ergänzt.

8. Gerät nach wenigstens einem der Ansprüche 3 bis 7, **dadurch gekennzeichnet, dass** die elektrische Steuerung (5) drahtlos via Satellit, Handy oder Mobilfunk jeden Teilnehmer (T₁, T₂, Tₙ) individuell abschaltet oder diesem wählbar ein gefiltertes oder ungefiltertes Signal (S_{g} oder Sᵤ) bereitstellt.

9. Gerät nach wenigstens einem der Ansprüche 3 bis B, **dadurch gekennzeichnet, dass** die elektrische Steuerung (5) kabelnetzbetreiberspezifisch zum individuellen Ausschalten, oder Bereitstellen von gefilterten oder ungefilterten Ausgangssignalen (O₁, O₂ bis Oₙ) des Teilnehmers (T₁, T₂ bis Tₙ) nachrüstbar ist.

10. Gerät nach wenigstens einem der Ansprüche 1 bis 9, **dadurch gekennzeichnet, dass** von extern, bspw. vom Kabelnetzbetreiber (6) ein Teilnehmer (T₁, T₂ bis Tₙ) individuell abschaltbar, oder ein Signal als gefiltertes oder ungefiltertes Signal (S_{g}, Sᵤ) bereitstellbar ist, wobei eine Datenübertragung über das Eingangssignal (E) als Kabel-, Sat- oder terrestrisches Signal aufmodulierbar ist und im Gerät ein wählbarer Teilnehmer (T₁, T₂ bis Tₙ) schaltbar ist.

11. Gerät nach wenigstens einem der Ansprüche 1 bis 10, **dadurch gekennzeichnet, dass** parallel zum Verstärker (1) zumindest ein Rückwegmodul (7) für zumindest ein HSI-Modem zuschaltbar oder als plug-in Komponente nachrüstbar ist.

12. Gerät nach wenigstens einem der Ansprüche 1 bis 11, **dadurch gekennzeichnet, dass** im Verteiler (1) eine Aufspaltung des Signals in mehrere Signale (Sᵤ, S_{g} bis Sₙ) aufspaltbar ist, wobei die Anzahl der Signale an eine beliebige Anzahl von Teilnehmern (T₁, T₂ bis Tₙ) bzw. Ausgangssignalen (O₁, O₂ bis Oₙ) aufteilbar ist.
